# EUROPÄISCHE PATENTSCHRIFT

(11) **EP 4 249 218 B1**
(45) Veröffentlichungstag und Bekanntmachung des Hinweises auf die Patenterteilung: **06.05.2026**
(21) Anmeldenummer: 23160672.4
(22) Anmeldetag: 08.03.2023
(51) Int. Cl.: B29C 65/08, B29C 65/00, B29C 69/00, B29C 45/00, B29L 31/30, B29C 45/37, B60R 19/48

(54) **VERFAHREN ZUM HERSTELLEN EINER VERBINDUNG ZWISCHEN EINEM ERSTEN BAUTEIL AUS KUNSTSTOFF UND EINEM ZWEITEN BAUTEIL AUS KUNSTSTOFF UND DADURCH HERGESTELLTE BAUTEILVERBINDUNG**
METHOD FOR PRODUCING A CONNECTION BETWEEN A FIRST PLASTIC COMPONENT AND A SECOND PLASTIC COMPONENT AND COMPONENT CONNECTION PRODUCED THEREBY
PROCÉDÉ DE RÉALISATION D'UNE LIAISON ENTRE UN PREMIER ÉLÉMENT EN PLASTIQUE ET UN SECOND ÉLÉMENT EN PLASTIQUE ET ASSEMBLAGE AINSI OBTENU

(30) Priorität: 23.03.2022 DE 102022202854
(43) Veröffentlichungstag der Anmeldung: 27.09.2023
(73) Patentinhaber: Magna Exteriors (Bohemia) s.r.o., 460 06 Liberec (CZ)
(72) Erfinder: ZDÁRSKÝ, Radim, 463 12 Liberec 25 (CZ); VOHLÍDAL, Ondrej, 460 01 Liberec 1 (CZ); SOLTYS, Jan, 463 12 Liberec (CZ)
(74) Vertreter: Reuter, Silke Beatrix

(56) Entgegenhaltungen:
- EP-A1- 3 848 185
- JP-A- 2016 010 883

## Beschreibung

Die Erfindung betrifft ein Verfahren zum Herstellen einer Verbindung zwischen einem ersten Bauteil aus Kunststoff und einem zweiten Bauteil aus Kunststoff.

### Stand der Technik

Vermehrt werden Stoßfänger mit Aufnahmen für Ultraschallsensoren für Einparkhilfen und Parkassistenten und Radarsensoren hergestellt.

Aus der DE 10 2007 034 412 A1 ist eine für ein Kraftfahrzeug bestimmte Vorrichtung zur Überwachung eines Abstands des Fahrzeugs von einem Objekt mittels eines insbesondere als ein Ultraschallsensor ausgeführten Sensors zur Abstandsmessung bekannt, welche einen in einem Karosseriebereich des Kraftfahrzeugs, insbesondere an einem Kunststoffteil, wie beispielsweise ein Stoßfänger, mittels einer Anlagefläche fixierbaren, den Sensor aufnehmenden Halter aufweist. Weiterhin ist ein Ultraschall-Schweißverfahren zur Fixierung der Vorrichtung sowie ein Karosseriebauteil aus Kunststoff und einen an diesem fixierbaren Sensor offenbart.

Diese Vorrichtung wird unter der Bezeichnung "Parkpilot" oder "Park-Distance-Control" bereits vielfach eingesetzt. Bei diesem bekannten System erfassen im hinteren oder vorderen Stoßfänger eingebaute Abstandssensoren mögliche hinter dem Fahrzeug befindliche Objekte mittels Ultraschallimpulsen nach dem Echolotprinzip. Die Sensorsignale werden in einer Auswerte- und Steuereinrichtung ausgewertet, welche die Entfernung des nächsten erkannten Objekts errechnet. Sobald die Berechnung ergibt, dass ein Hindernis weniger als beispielsweise 1,2 m von dem Fahrzeug entfernt ist, erfolgt ein Warnsignal an den Fahrzeugführer in Form eines intermittierenden Tonsignals. Die Pause zwischen einzelnen Tönen des Warnsignals verkürzt sich mit der Annäherung an das Hindernis, bis das Warnsignal bei einer Entfernung von 30 cm in einen Dauerton übergeht. Gleichzeitig kann die Entfernung optisch auf einer mehrfarbigen Anzeige angezeigt werden, die im Fond des Fahrzeugs angebracht ist.

Da die Halter als Varianten des großflächigen Bauteils, also der Stoßfänger verbaut werden müssen, werden sie nicht gleich mitgespritzt, sondern nach Anforderung mit dem großflächigen Basisbauteil verschweißt.

Weiterhin ist es auch bekannt, die Halter mittels eines Ultraschall-Schweißverfahrens an der Karosserie zu befestigen. Hierzu sind die korrespondierenden Flächen der Anlagefläche sowie des Karosseriebereichs glattflächig ausgeführt, um so die Kontaktfläche so groß wie möglich zu gestalten. Als nachteilig erweist sich jedoch dabei, dass es durch den Energieeintrag beim Aufschmelzen der Kontaktfläche auf der sichtbaren Seite des Karosseriebereichs zu einer Beeinträchtigung des optischen Erscheinungsbildes kommen kann.

Aus der EP 3 848 185 A1 ist ein Verfahren zum Ultraschallverschweißen zweier Kunststoffkomponenten unter Verwendung einer Sonotrode bekannt, wobei die Energie zum Verschweißen über mindestens zwei Pins der Sonotrode in die Kunststoffkomponenten eingebracht wird, wobei die beiden Kunststoffkomponenten Schritt für Schritt miteinander verschweißt werden, wobei der jeweils nachfolgende Schritt der Verschweißung in einem Bereich erfolgt, der bereits durch den vorhergehenden Schritt der Verschweißung beansprucht und entspannt ist.

Die Schalleinkopplung erfolgt durch die mindestens zwei hervorstehenden Erhebungen bzw. Pins. Hierdurch wird eine ortsgenaue Schalleinkopplung gewährleistet, die weitgehend unabhängig von ggf. vorhandenen Bauteiltoleranzen oder Positionierungenauigkeiten ist. Somit lassen sich unerwünschte Schweißschlüsse in Randbereichen der Sonotrode und/oder des Bauteils bzw. Werkstücks vermeiden. Während des Schweißprozesses wird die Sonotrode so auf das Werkstück aufgesetzt, dass eine Mittellängsachse der Sonotrode senkrecht zur Oberfläche des Werkstücks verläuft. Die Schwingungseinkopplung erfolgt somit senkrecht in das Werkstück, d. h. die zu verschweißenden Bauteile, in Richtung der Mittellängsachse der Sonotrode.

US 2005 104 389 A1 zeigt einen Zusammenbau eines Verkleidungsteils aus thermoplastischem Material für ein Kraftfahrzeug mit einem anderen Teil, das einen dünnen Abschnitt aus thermoplastischem Material aufweist, wobei der dünne Abschnitt Öffnungen aufweist und das Schmelzen des Verkleidungsteils zusammen mit dem dünnen Abschnitt ausschließlich an den Umrissen der Durchgangsöffnungen lokalisiert ist.

Aus der DE 10 2012 221 605 A1 ist ein Verfahren zum Verbinden zweier Bauteile bzw. einem Bauteilverbund bekannt, wobei als zweites Bauteil ein bereits vorgefertigtes, d.h. festes Bauteil aus Kunststoff verwendet wird, das im Verbindungsbereich mit dem ersten Bauteil durch Anschmelzen bzw. Verflüssigen des Kunststoffmaterials auf der dem ersten Bauteil zugewandten Seite mit dem ersten Bauteil verbunden wird. Durch das Anschmelzen bzw. Verflüssigen des Kunststoffmaterials des zweiten Bauteils findet eine innige Verbindung bzw. Verzahnung des Kunststoffs des zweiten Bauteils mit der Oberflächenstruktur des ersten Bauteils statt, so dass eine sichere und feste Verbindung der beiden Bauteile nach dem (Wieder-)Erstarren des Kunststoffs ausgebildet wird. Eine der Bauteiloberflächen ist dabei strukturiert.

WO 2018 / 172 385 A1 zeigt ein Verfahren zum Verbinden eines ersten Objekts mit einem zweiten Objekt, wobei eines der Objekte ein bestimmtes Dichteprofil aufweist. Rippen stellen Verankerungsstellen der beiden Objekte dar, wobei die beiden Objekte sehr unterschiedliche Dichte aufweisen.

Die JP 2016 010 883 A zeigt ein Verfahren zum Verbinden von zwei Kunststoffbauteilen. Dabei handelt es sich um ein Fahrzeug-Bauteil, eine Stoßfänger und eine Sensorhalterung. Verwendet wird Ultraschallschweißen, um die beiden Komponenten miteinander zu verbinden.

Im Bereich, in dem die beiden Bauteile miteinander verschweißt werden, ist die Oberfläche so ausgebildet, dass sie Rippen bildet. Die Rippen der beiden Bauteile können dabei vor dem Verschweißen gegeneinander versetzt angeordnet sein.

Es ist Aufgabe der Erfindung ein optimiertes Herstellverfahren vorzuschlagen, das zu einer Verbindung hoher Festigkeit führt.

Die Aufgabe wird gelöst mit einem Verfahren zum Herstellen einer Verbindung zwischen einem ersten Bauteil aus Kunststoff und einem zweiten Bauteil aus Kunststoff , wobei mindestens eines der beiden Bauteil in Kunststoffspritzguss hergestellt wird, und wobei mindestes ein Befestigungsbereich an dem mindestens einem Bauteil vorgesehen ist, der mit einer Oberflächenstruktur aus Rillen geringen Abstands gespritzt wird, und wobei die Bauteile im Befestigungsbereich miteinander in einem Ultraschall-Schweißverfahren verbunden werden und wobei der Befestigungsbereich mit Pyramiden oder Kegeln strukturiert wird.

Durch die Oberflächenstruktur verbessert sich die Festigkeit nach dem Schweißen sehr.

Die Rillen werden im Befestigungsbereich des mindestens eines Bauteils mindestens teilweise parallel zueinander hergestellt.

Die Rillen werden im Befestigungsbereich des mindestens eines Bauteils in einem Abstand Rillenspitze zu Rillenspitze von 0,1 bis 2 mm hergestellt.

Die Rillen im Befestigungsbereich des mindestens eines Bauteils werden in einer Tiefe zwischen Rillenspitze und Rillengrund von 0,1 bis 2mm hergestellt.

Es ist von Vorteil, dass die Energie zum Verschweißen über mindestens einen Pin einer Sonotrode in die Kunststoffkomponenten eingebracht wird, wobei die beiden Bauteile Schritt für Schritt punktuell miteinander verschweißt werden.

Dabei ist der jeweils nachfolgende Schritt der Verschweißung in einem Bereich erfolgt, der bereits durch den vorhergehenden Schritt der Verschweißung beansprucht und wiederentspannt ist.

Die Bauteile sind Stoßfänger und Halter für Sensoren, Verstärkungsteile und andere Teile mit dünnerer Wandstärke.

### Beschreibung der Figuren

Die Erfindung wird nachfolgend beispielhaft unter Bezugnahme auf die beigefügte Zeichnung beschrieben.
Fig. 1 zeigt eine schematische Darstellung eines Stoßfängers vorne,
Fig. 2 zeigt eine Sonotrode im Stand der Technik,
Fig. 3 zeigt einen beispielhaften Schweißpfad,
Fig. 4. zeigt eine Oberflächenstruktur,
Fig. 5a, 5b und 5c zeigen je eine Aufsicht auf Oberflächen eines Bauteils.

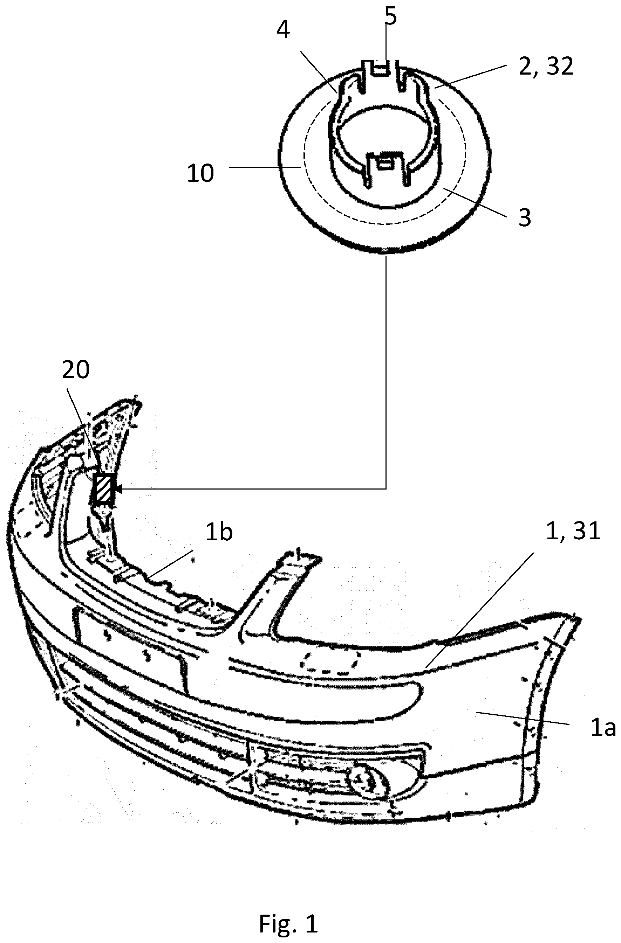

Figur 1 zeigt ein Ausführungsbeispiel mit einem beispielhaften Stoßfänger 1, wie er in der Front eines Fahrzeugs verwendet wird. der Stoßfänger 1 stellt dabei ein erstes Bauteil 31 aus Kunststoff dar. Es kann sich aber auch um einen Schweller, eine Heckklappe, eine Radkastenverkleidung oder ein anderes Kunststoffteil im Außenbereich des Fahrzeugs handeln.

Auf der zu dem Fahrzeug gewandten Seite 1b des Stoßfängers 1 werden beispielsweise Halter 2 für unterschiedliche Sensoren befestigt. Es können aber auch Verstärkungsteile, Spoiler etc als zweites Bauteil 32 mit dem ersten Bauteil 31 verbunden werden. Der beispielhaft dargestellte Halter 2 weist dabei eine ringförmige Anlagefläche 3 sowie eine zylinderförmige Aufnahme 4 auf. In die Aufnahme 4 wird ein Sensor gesteckt und über die an der Aufnahme 4 angebrachten Laschen 5 über eine Klips-Verbindung oder auch einen Bajonettverbindung verriegelt. Die nach außen weisende Oberfläche 1 a des Stoßfängers 1 darf keinen sichtbaren Spuren des Halters oder der Halter 2 zeigen und muss ein perfektes Lackierbild abgeben.

Die Anlagefläche 3 des Halters 2 kann dabei natürlich auch quadratisch oder rechteckig sowie asymmetrisch ausgeführt sein, um eine genaue Lagebestimmung des Halters 2 am Stoßfänger 1 zu gewährleisten. Ein möglicher Schweißpfad 10 ist als kreisförmiger Pfad angedeutet.

Auf der inneren Seite 1b des Stoßfängers 1 ist ein Befestigungsbereich 20 für den Halter 2 ausgewiesen, der in diesem Beispiel rechteckig gewählt ist.

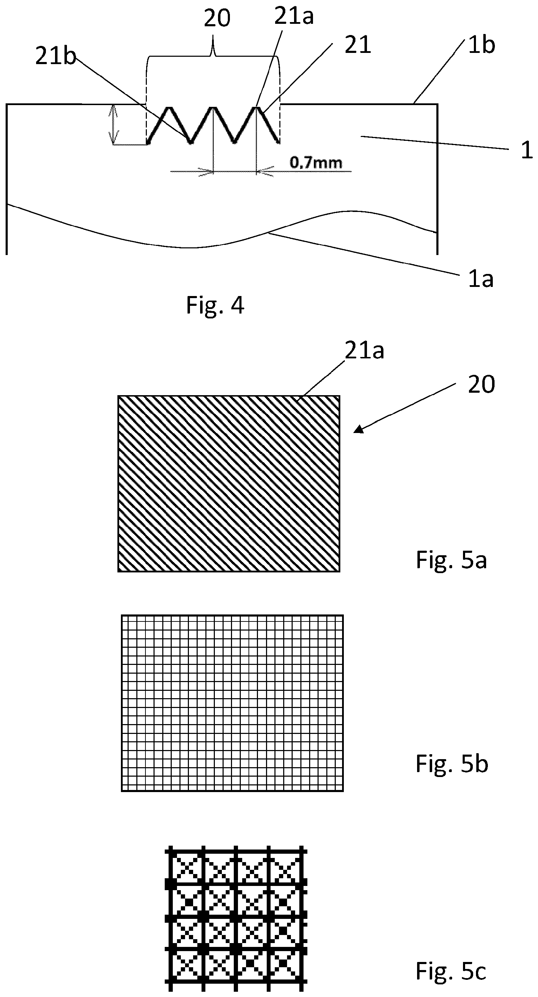

Einen Querschnitt durch den Befestigungsbereich 20 des Stoßfängers 1 zeigt die Figur 4. Die Oberfläche des Stoßfängers 1 ist mit einer Rillenstruktur ausgebildet, wie sie auch in Figur 5a in der Aufsicht gezeigt ist. Die Rillen 21 sind mit ihrer Tiefe nur an der Oberfläche des Stoßfängers 1 angebracht, der eine wesentlich größerer Dicke von bis zu 15 mm aufweist.

Die Rillen haben einen Abstand unter einem Millimeter, im Ausführungsbeispiel sind es 0,7 mm Abstand von Rillenspitze 21a zur nächsten Rillenspitze 21a. Die Tiefe der Rillen von Rillenspitze 21a bis zum Rillengrund 21b beträgt beispielhaft 0,6 mm. Der Bereich für den Abstand der Rillenspitzen wird zwischen 0,1 und 2 mm angesetzt. Die Rillentiefe mit 0,1-2 mm. In diesem Bereich erfährt die angestrebte Verbindung eine optimale Stärke.

Die Rillen 21 sind, wie in Figur 5a gezeigt, in einer Ausführungsform linear und parallel zueinander angeordnet. In der Figur 5b ist eine Anordnung in einem Schachbrettmuster gezeigt, in dem die Rillenspitzen 21a Quadrate oder Rechtecke oder auch eine hexagonale Struktur ausbilden. Dabei bleibt aber der geringe Abstand zwischen den Rillenspitzen 21a und die Tiefe zum Rillengrund 21b erhalten.

Eine beispielhafte Ausführung verwendet 1x1 mm große Quadrate mit 0,2 mm Tiefe und einem Abstand der Rillenspitzen zueinander von 1,5 mm. Der optimale Bereich liegt bei einer Auslegung von 0,2 bis 3 mm Abständen und einer Tiefe von 0,2 bis 3 mm.

In der Figur 5c ist eine Oberflächenstruktur dargestellt, die kleine Pyramiden auf der Basis eines Quadrats oder Rechtecks ausbildet. Auch eine Kegelstruktur auf der Basis von Kreisen und Ellipsen ist möglich. Die Höhe der Pyramiden oder Kegel ist dabei zwischen 0,1 und 2 mm, die Abstände betragen 0,1 bis 2 mm.

Die Kegel können auch als Kegelstümpfe ausgebildet sein.

Bei der Herstellung der Verbindung zwischen Stoßfänger 1 und Halter 2, also einem ersten Bauteil 31 aus Kunststoff und einem zweiten Bauteil 32 aus Kunststoff, werden die ersten und die zweiten Bauteile in Kunststoffspritzguss hergestellt. Das erste Bauteil 31 oder das zweite Bauteil 32 oder beide Bauteile weisen einen oder mehrere Befestigungsbereiche 20 auf. Diese werden im Kunststoffspritzguss mit der Gesamtform der Bauteile hergestellt.

Als Material dienen dabei beispielsweise PP, PP mit Talkum, PP mit Glasfaser, ABS, PC mit ABS uns ASA.

Im nächsten Schritt werden die Bauteile 31, 32 miteinander formschlüssig verbunden, wobei die Befestigungsbereiche 20 als Anbindungsflächen dienen.

Als Schweißverfahren kommen Ultraschallschweiß-Verfahren zur Anwendung. Beispielsweise wird das aus der DE 10 2020 200 184 A1 bekannte Schweißverfahren eingesetzt.

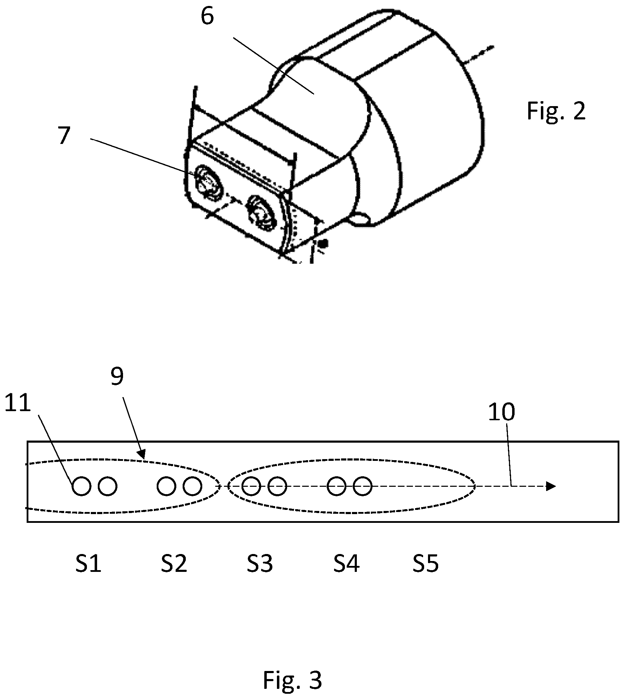

Das Verfahren verwendet Ultraschallschweißen unter Verwendung einer Sonotrode 6, wie sie beispielhaft in Figur 2 dargestellt ist. Die Sonotrode 6 weist dabei in diesem Ausführungsbeispiel zwei Pins 7 auf.

Über eine solche Sonotrode 6 wird der Halter 2 mit dem Stoßfänger 1 punktuell an den beiden Pins 7 verschweißt.

Der Vorgang des Verschweißens erfolgt dabei Schritt für Schritt über eine Bewegung der Sonotrode 6 entlang der Anlagefläche 3 des Halters 2, der am Befestigungsbereich 20 aufliegt. Im Beispiel der Figur 1 bewegt sich die Sonotrode entlang einer Kreislinie im Bereich der ringförmigen Anlagefläche 3.

In der Figur 3 wird ein linearere Schweißpfad dargestellt. Die Schweißpunkte 11 werden durch die Verwendung der Sonotrode mit zwei Pins paarweise gesetzt. Nach dem Schweißschritt S1 erfolgt der Schweißschritt S2 usw. Für den Schweißschritt S1 ist ein Bereich der Energiebeeinflussung 9 gekennzeichnet, ebenso in Schweißschritt S4.

Dabei erfolgt nach dem ersten Schritt des Verschweißens, z. B S1, der nächste Schritt S2 in einem Bereich 9 des Kunststoffelements, der bereits durch den ersten Schweißschritt S1 einer spezifischen Belastung ausgesetzt war und sich wieder im Zustand der Entspannung befindet. Durch die Oberflächenstrukturierung mit Rillen 21 wird die Oberfläche des ersten und/oder zweiten Bauteils 31,32 vergrößerts, so dass das Aufschmelzen der Struktur besser und effizienter erfolgt.

Das heißt, dass für den zweiten Schweißschritt S2 weniger Energie, Stress und Wärmebeeinflussung aufbracht werden muss, als für S1, da das Material noch nicht wieder vollständig abgekühlt und ausgehärtet ist. Durch die schrittweise Verschweißung wird integral weniger Energie in die zu verschweißenden Komponenten eingebracht, aber die Schweißverbindung ist sehr fest. Die Festigkeit der Verbindung erhöht sich gegenüber einer Verbindung zwischen Bauteilen ohne Oberflächenstruktur um 9 bis 13%.

Dabei muss zwischen den einzelnen Schweißschritten S1, S2... ein gewisser zeitlicher Abstand vorliegen, um dem Material Gelegenheit zu geben, zu entspannen.

### Bezugszeichenliste

1 Stoßfänger
1a innere Seite Stoßfänger
1b äußere Seite Stoßfänger
2 Halter
3 Auflagefläche
4 Aufnahme
5 Laschen
6 Sonotrode
7 Pins
9 Bereich
10 Schweißpfad
11 Schweißpunkt
20 Befestigungsbereich
21 Rille
21a Rillenspitze
21b Rillengrund
31 erstes Bauteil
32 zweites Bauteil

## Patentansprüche

1. Verfahren zum Herstellen einer Verbindung zwischen einem ersten Bauteil (31) aus Kunststoff und einem zweiten Bauteil (32) aus Kunststoff, wobei mindestens eines der beiden Bauteile in Kunststoffspritzguss hergestellt wird, und wobei mindestes ein Befestigungsbereich (20) an dem mindestens einem Bauteil (31, 32) vorgesehen ist, der mit einer Oberflächenstruktur aus Rillen (21) geringen Abstands gespritzt wird, und wobei die Bauteile (31, 32) im Befestigungsbereich (20) miteinander in einem Ultraschall-Schweißverfahren verbunden werden, wobei die Rillen (21) im Befestigungsbereich (20) des mindestens einen Bauteils (31, 32) in einem Abstand Rillenspitze (21a) zu Rillenspitze (21a) von 0,1 bis 2 mm hergestellt werden **dadurch gekennzeichnet, dass** der Befestigungsbereich mit Pyramiden oder Kegeln strukturiert wird.

2. Verfahren nach Anspruch 1, wobei die Rillen (21) im Befestigungsbereich (20) des mindestens einen Bauteils (31, 32) mindestens teilweise parallel zueinander hergestellt werden.

3. Verfahren nach einem der vorhergehenden Ansprüche, wobei die Rillen (21) im Befestigungsbereich (20) des mindestens einen Bauteils (31, 32) in einer Tiefe zwischen Rillenspitze (21a) und Rillengrund (21b) von 0,1 bis 2mm hergestellt werden.

4. Verfahren nach einem der vorhergehenden Ansprüche, wobei die Energie zum Verschweißen über mindestens einen Pin (7) einer Sonotrode (6) in die Kunststoffkomponenten eingebracht wird, wobei die beiden Bauteile (31, 32) Schritt für Schritt punktuell miteinander verschweißt werden.

5. Verfahren nach Anspruch 4, **dadurch gekennzeichnet, dass** der jeweils nachfolgende Schritt der Verschweißung in einem Bereich (9) erfolgt, der bereits durch den vorhergehenden Schritt der Verschweißung beansprucht und wiederentspannt ist.

6. Verfahren nach einem der vorhergehenden Ansprüche, **dadurch gekennzeichnet, dass** die Bauteile (31, 32) Stoßfänger (1) und Halter (2) für Sensoren, Verstärkungsteile und andere Teile mit dünnerer Wandstärke sind.

## Claims

1. Method for producing a connection between a first plastic component (31) and a second plastic component (32), wherein at least one of the two components is produced by plastics injection moulding, and wherein at least one fastening region (20) is provided on the at least one component (31, 32) and is moulded with a surface structure of grooves (21) having a small spacing, and wherein the components (31, 32) are connected to one another by an ultrasonic welding method in the fastening region (20), the grooves (21) being produced in the fastening region (20) of the at least one component (31, 32) with a groove apex (21a) to groove apex (21a) spacing of from 0.1 to 2 mm, **characterized in that** the fastening region is structured with pyramids or cones.

2. Method according to Claim 1, wherein the grooves (21) are produced in the fastening region (20) of the at least one component (31, 32) at least partially parallel to one another.

3. Method according to either of the preceding claims, wherein the grooves (21) are produced in the fastening region (20) of the at least one component (31, 32) with a depth between the groove apex (21a) and the groove base (21b) of from 0.1 to 2 mm.

4. Method according to any one of the preceding claims, wherein the energy for the welding is introduced into the plastic components via at least one pin (7) of a sonotrode (6), the two components (31, 32) being spot-welded to one another step-by-step.

5. Method according to Claim 4, **characterized in that** the next respective welding step is carried out in a region (9) which has already been stressed by the previous step of the welding and relaxed again.

6. Method according to any one of the preceding claims, **characterized in that** the components (31, 32) are bumpers (1) and holders (2) for sensors, reinforcing parts and other parts having a relatively thin wall thickness.

## Revendications

1. Procédé pour réaliser une liaison entre un premier composant (31) en matière plastique et un deuxième composant (32) en matière plastique, au moins l'un des deux composants étant fabriqué par moulage par injection de matière plastique, et au moins une zone de fixation (20) étant prévue sur l'au moins un composant (31, 32), qui est moulée par injection avec une structure de surface composée de rainures (21) à faible espacement, et les composants (31, 32) étant reliés l'un à l'autre dans la zone de fixation (20) par un procédé de soudage par ultrasons, les rainures (21) dans la zone de fixation (20) de l'au moins un composant (31, 32) étant réalisées avec un espacement de pointe de rainure (21a) à pointe de rainure (21a) de 0,1 à 2 mm, **caractérisé en ce que** la zone de fixation est structurée avec des pyramides ou des cônes.

2. Procédé selon la revendication 1, dans lequel les rainures (21) sont réalisées au moins en partie parallèlement les unes aux autres dans la zone de fixation (20) de l'au moins un composant (31, 32).

3. Procédé selon l'une quelconque des revendications précédentes, dans lequel les rainures (21) sont réalisées dans la zone de fixation (20) de l'au moins un composant (31, 32) à une profondeur entre la pointe de rainure (21a) et le fond de rainure (21b) de 0,1 à 2 mm.

4. Procédé selon l'une quelconque des revendications précédentes, dans lequel l'énergie pour le soudage est introduite dans les composants en matière plastique par l'intermédiaire d'au moins une broche (7) d'une sonotrode (6), les deux composants (31, 32) étant soudés l'un à l'autre de manière ponctuelle, étape par étape.

5. Procédé selon la revendication 4, **caractérisé en ce que** l'étape suivante de soudage s'effectue dans une zone (9) qui a déjà été sollicitée et détendue par l'étape de soudage précédente.

6. Procédé selon l'une quelconque des revendications précédentes, **caractérisé en ce que** les composants (31, 32) sont des pare-chocs (1) et des supports (2) pour capteurs, des pièces de renfort et d'autres pièces à paroi plus mince.
